# EUROPEAN PATENT APPLICATION

(11) **EP 4 557 727 A1**
(43) Date of publication of application: **21.05.2025**
(21) Application number: 24209382.1
(22) Date of filing: 29.10.2024
(51) Int. Cl.: H04N 19/117, H04N 19/124, H04N 19/86, H04N 19/192

(54) **LOSSY IMAGE COMPRESSION WITH DIFFUSION MODELS**

(30) Priority: 15.11.2023 US 202363599541 P; 18.10.2024 US 202418920557
(71) Applicant: Disney Enterprises, Inc., Burbank, CA 91521 (US); ETH Zürich (Eidgenössische Technische Hochschule Zürich), 8092 Zürich (CH)
(72) Inventor: De Albuquerque Azevedo, Roberto Gerson, Burbank, 91521 (US); Relic, Lucas, Burbank, 91521 (US); Schroers, Christopher Richard, Burbank, 91521 (US); Xue, Yuanyi, Burbank, 91521 (US); Labrozzi, Scott, Burbank, 91521 (US)
(74) Representative: Müller-Boré & Partner Patentanwälte PartG mbB

(57) **Abstract**

In some embodiments, a method receives a quantized latent representation of an image in a latent space. The image is encoded into a representation in the latent space and quantized to generate the quantized latent representation. A time step parameter is received that is generated based on the representation. The method performs an inverse quantization process to generate a reconstructed representation. A diffusion model performs a denoising process for a number of iterations based on the time step parameter to remove noise from the reconstructed representation to generate a denoised reconstructed representation. The denoised reconstructed representation is decoded into a reconstructed image.

## Description

### CROSS REFERENCE TO RELATED APPLICATIONS

Pursuant to 35 U.S.C. §119(e), this application is entitled to and claims the benefit of the filing date of U.S. Provisional App. No. 63/599,541 filed November 15, 2023, entitled "LOSSY IMAGE COMPRESSION WITH FOUNDATION DIFFUSION MODELS", the content of which is incorporated herein by reference in its entirety for all purposes.

### BACKGROUND

Multimedia content is delivered through networks globally, and makes up a large portion of the traffic. The development of efficient compression algorithms is important to efficiently deliver the multimedia content throughout the networks.

Traditional encoder-decoders (CODECS), which use handcrafted transformations by users, may be outperformed by data-driven neural image compression (NIC) methods that optimize for both rate and distortion. Nevertheless, neural image compression methods may still produce blurry and unrealistic images, such as in low bitrate settings. This is because the methods may be optimized for rate distortion, where distortion is measured with pixel-wise metrics like mean squared error. The optimizing for low distortion, such as pixel-wise error, may result in unrealistic images. This may be because emphasizing pixel-wise accuracy or similarity to the original image may lead to overly smoothed or blurry outputs.

### BRIEF DESCRIPTION OF THE DRAWINGS

The included drawings are for illustrative purposes and serve only to provide examples of possible structures and operations for the disclosed inventive systems, apparatus, methods and computer program products. These drawings in no way limit any changes in form and detail that may be made by one skilled in the art without departing from the spirit and scope of the disclosed implementations.
FIG. 1 depicts a simplified system for performing compression according to some embodiments.
FIG. 2 depicts a simplified flowchart of a method for performing parameter estimation according to some embodiments.
FIG. 3 depicts a simplified flowchart of a method for performing a diffusion process according to some embodiments.
FIG. 4 depicts a simplified flowchart of a method for performing the training process according to some embodiments.
FIG. 5 illustrates one example of a computing device according to some embodiments.

### DETAILED DESCRIPTION

Described herein are techniques for a content processing system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

### System Overview

Both traditional and neural network-based image compression methods may produce unrealistic artifacts (e.g., blocking or ringing), such as in extreme compression settings (e.g., low bitrate). The artifacts look artificial to the human eye, and decoded images may look unreal. In some bitrate scenarios, such as low bitrate scenarios, however, it may be preferable to decode realistic images, which may be perceptually pleasant to viewers, even if it means lower performance in pixel-wise metrics. In such a scenario, it may be more interesting to allow the generation of textures and other hard-to-encode content, even if they are not exactly the same as the source image, as long as they look realistic and resemble the original content. In some embodiments, a system improves image compression by using a generative model (e.g., diffusion models) on the decoder side to synthesize realistic details while spending as few bits as possible. The system may use a parameter estimation network that may optimize a rate distortion objective between an input image and a reconstructed image to produce realistic images.

An image compression pipeline may use a diffusion model that may synthesize lost details from the compression process. For example, the diffusion model may be used to correct quantization error that may result using a quantization process. The error introduced during quantization may be similar to adding noise. In fact, adding uniform noise is often used as a differentiable surrogate to the quantization operation during the training of neural codecs. As diffusion models are inherently denoising models, the diffusion models can then be used to counteract the quantization error introduced during encoding. In addition, the system predicts the ideal number of denoising diffusion steps to compensate for information lost during quantization and consistently produces realistic images. Leveraging the similarity between quantization error and noise, the diffusion model may perform a subset of denoising steps corresponding to the noise level (e.g., quantization error) of a quantized latent representation. The resulting output of the diffusion model may correct the quantization error from the quantization process. This may improve the resulting decoded image with more realistic images, particularly at low bitrates, but the improvement may occur at all bitrates.

In some embodiments, the system may be improved by using a foundation diffusion model. The foundation diffusion model may not need to be trained to perform the denoising operations. Rather, a parameter estimation process may predict an ideal denoising time step for the diffusion model, which allows for balancing between transmission cost and reconstruction quality. The diffusion model may then synthesize information lost during quantization to correct quantization error based on the number of predicted time steps. Accordingly, a latent diffusion-based lossy image compression pipeline is able to produce highly realistic and detailed image reconstructions at bitrates that may be low. The parameter estimation process may learn adaptive quantization parameters in addition to the ideal number of denoising diffusion time steps to allow realistic reconstruction for a range of target bitrates.

### System

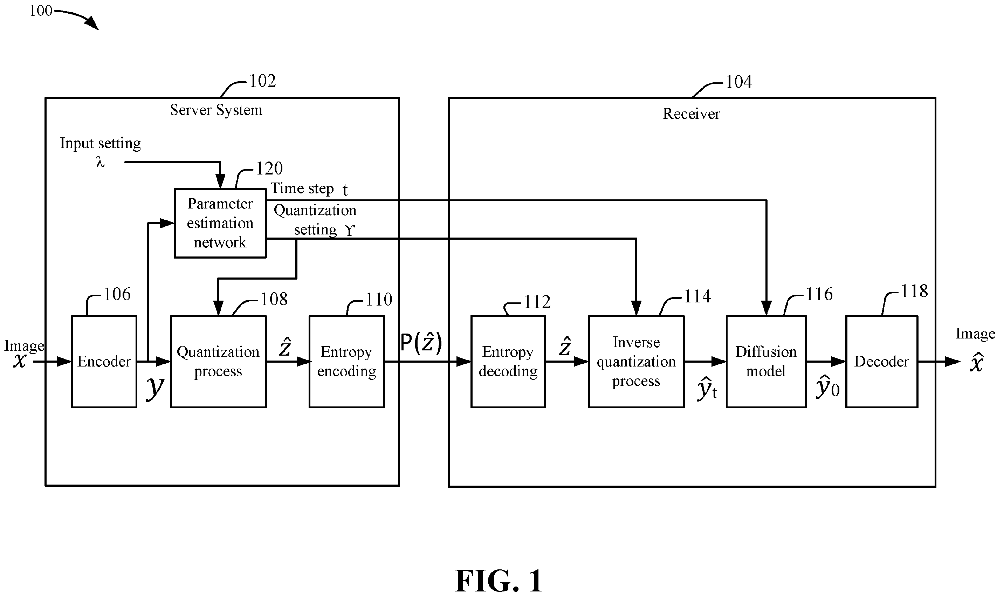

FIG. 1 depicts a simplified system 100 for performing compression according to some embodiments. System 100 includes a server system 102 and a receiver 104. Server system 102 may encode the content and receiver 104 may decode the content. In some embodiments, server system 102 may transmit the encoded content across a network to receiver 104. However, the encoding and decoding may be performed on a single system. In some embodiments, server system 102 may be encoding a video, which is transmitted across a network to a client device as receiver 104. The client device may decode the video and display the video using a media player on an interface. The client device in this case may be a smartphone, living room device, television, personal computer, laptop, tablet device, etc. Other system configurations may also be appreciated.

Diffusion models may be a class of generative models that define an iterative process that gradually destroys an input signal by adding noise as a time step t increases, and then tries to model the reverse process. Empirically, the forward process is performed by adding noise, such as Gaussian noise, to the signal. Thus, the reverse process is a denoising process to remove noise from the input. The diffusion model approximates the reverse process by estimating the noise level of the image and using it to predict the previous step of the forward process. This may remove a certain amount of noise from the image. This may be performed for a number of time steps. To fully denoise the image, the diffusion model may iteratively perform a full set of time steps in the reverse process.

Latent diffusion models may provide improved memory and computational efficiency by moving the diffusion process to a spatially lower dimensional latent space compared to the image space (e.g., pixel space). The latent space may provide similar performance of the corresponding image space diffusion models while requiring less parameters and memory. Here, the latent diffusion models may be trained in a latent space in which an encoder may encode an image to a latent representation in the latent space. Then, the latent representation is processed by the latent diffusion model to denoise the latent representation by time steps t. The denoised latent representation may be decoded back to a decoded image in the image space.

Since latent diffusion models are based on encoders because they encode an image into a latent space that maps the image to a lower dimensional space. Thus, latent diffusion models may also be considered a type of compression method. In some cases, latent diffusion models may not produce realistic reconstructions of the image. However, system 100 may control parameters in the pipeline to improve the performance of the pipeline to produce realistic images even at low bitrates.

In the pipeline, server system 102 may receive an image x. For example, image x may be an image from a video that is being encoded. The following process may be performed for each image of the video. Encoder 106 may encode the image into a latent representation y in a latent space. The latent space may be a lower dimensional space compared to the image space. That is, the latent space may represent a compressed version of the input capturing the important features. In some embodiments, encoder 106 may be a variational autoencoder (VAE), which may be a neural network or machine learning model, that is trained to represent the image in the latent space. Encoder 106 may be considered part of a diffusion model 116, or may be separate. In some embodiments, the latent representation y may be a latent vector that captures key features of the input image in the latent space. The latent representation y may be mapped from the input image to a distribution in the latent space that may be parameterized by a mean and a variance. Although a variational autoencoder is described, other encoders that can map the input image into the latent space may be used.

Quantization process 108 may quantize the latent representation y into a quantized latent representation *ẑ*. The quantization process may be an affine transformation T for each channel of the latent representation y, which is parameterized by a quantization setting Y, before applying integer quantization. The affine transformation may be a linear mapping used to transform floating-point values into a fixed-point representation, such as integers. The channels may be channels of an image, such as colors, intensity, etc.

The quantization of the latent representation y may generate a finite set of discrete values or codes based on the values found in latent representation y. The quantization setting Υ may balance between the compression used and the quality. The quantization setting Y may represent a rate distortion balance or tradeoff, and will be described in more detail below In some embodiments, the quantization setting scale the range of values of the latent representation y before rounding the latent representation y to integers. The quantization setting may control the affine transformation, and then the quantization setting is just rounding. For example, in some embodiments, the quantization parameter Y would be one number that is multiplied with values of the latent representation y. So for instance if the latent representation y is [-3, -2.9, -2.8,..., - 2.1,- 2,0,- 1,9, ... 2.9, 3.0] , and gamma is 1, then the quantized values are [-3, -3, -3, ..., -2, -2, - 2, ..., 3, 3] when rounding is performed. If gamma is larger, such as 10 for example, the quantized values would be [-30, -29, -28, ..., -21, -20, -19, ..., 29, 30]. This is many more values than the previous case, which takes more bits to transmit but also introduces less quantization error, On the contrary, if the quantization setting Υ is 1/3 then the quantized values become [-1, -1, -1, ..., -1, - 1, -1, ..., 1, 1, 1] which is very little values, costs only a few bits, but introduces a large error. Although one value is described, the quantization setting Υ may be multiple values.

The quantized latent representation *ẑ* may be entropy encoded by entropy encoding 110. An entropy model may be used to encode the quantized latent representation to a bitstream that includes the quantized latent representation P(*ẑ*). Different entropy models may be used to entropy encode the quantized latent representation to a bitstream. Entropy coding may reduce the average number of bits needed to represent the quantized latent representation using entropy encoding methods, including Huffman coding and Arithmetic coding. The entropy encoding may reduce the average length of the quantized latent representation by assigning shorter codes to more frequent symbols and longer codes to less frequent ones.

Server system 102 may transmit the bitstream to receiver 104. An entropy decoder 112 may entropy decode the bitstream to reconstruct the quantized latent representation *ẑ*. Entropy decoding is the reverse process of the entropy encoding to reconstruct the bitstream to the quantized latent representation *ẑ*.

An inverse quantization process 114 may perform part of the inverse quantization (e.g., the reverse of the affine transformation of multiplying the latent representation by the quantization setting Y) using the quantization setting to generate a reconstructed latent representation *ŷₜ*. Inverse quantization is the reverse process of quantization process 108, and may reconstruct approximately the original values from the quantized latent representation *ẑ*. The reconstructed latent representation *ŷₜ* may have a quantization error added due to information loss. This quantization error may be similar to noise. For example, quantization error may introduce random variations into the latent representation during the process of converting continuous (high-precision) data, such as floating-point numbers, into discrete (low-precision) values, such as integers. The quantization setting may balance between the compression used and the quality. In some embodiments, using the example of multiplying the latent representation y with the quantization setting Y before rounding, this process would then be dividing by the quantization setting Y. The dividing by the quantization setting Y, provides diffusion model 116 with a range of values as input that is required.

The reconstructed latent representation is input into a diffusion model 116 to perform part of the inverse quantization process. This part of the inverse quantization of the quantized latent representation may map the a finite set of discrete values or codes to the original continuous values found in latent representation. Diffusion model 116 may denoise the reconstructed latent representation to remove noise, which may remove the quantization error that was introduced. That is, the quantization error may be similar to adding noise to an image, and diffusion model 116 may be used to denoise the reconstructed latent representation.

As described above, diffusion model 116 is trained to remove noise in iterative steps. Diffusion model 116 may use a parameter of time step t, where t is a number, to determine the number of iterations to use to denoise the reconstructed latent representation into a denoised reconstructed latent representation *ŷ₀*. For example, a time step may be one iteration in which the reconstructed latent representation is input into diffusion model 116 and a denoised latent representation *ŷ*_{*t-*1} is output. t-1 additional time steps are needed to determine *ŷ*₀This denoised latent representation may be re-input into diffusion model 116 in another iteration for a time step. This iteration performs another denoising process. The denoising process is performed as described above where the diffusion model approximates the reverse process by estimating the noise level of the image and using it to predict the previous step of the forward process. In this process, the denoising starts with a quantized latent representation, which already contains structural and semantic information from the image. In this scenario, performing an entire range of denoising steps during the decoding process in which diffusion model 116 may be trained to perform to produce a fully denoised image may be wasteful and may result in over-smoothed images. The entire range of denoising steps is used if going from pure noise to a full image. Since the system does not start from full noise, but a noisy version of the latent representation y, then the system only need to run a portion of the full range of steps. Running too many steps may cause a smooth image as the image may be denoised with too many steps. That is, in the training process, a signal has noise added to it, and then the diffusion model is trained to fully denoise the signal back to the original signal. However, not all the time steps may be needed because the diffusion model can leverage some structural and semantic information to perform the denoising in a subset of the time steps. Therefore, the time step t may be a subset of the denoising diffusion steps that are required from the full set of denoising steps. The output of diffusion model 116 produces a denoised reconstructed latent representation *ŷ*₀ to may have removed noise to correct the quantization error.

A decoder 118 may decode the denoised latent representation *ŷ*₀ into a decoded image *x̂*. In some embodiments, decoder 118 may be a variational auto decoder, but other decoders may be used. Decoder 118 may reconstruct the denoised latent representation from the latent space to the decoded image *x̂* in the image space. The decoded image may be improved in that at least some of the quantization error that was introduced may have been removed by diffusion model 116. The removal of this error may result in a more realistic reconstructed image.

### Parameter Estimation

As discussed above, a time step t and quantization setting Υ may be used as parameters. A parameter estimation network 120 may estimate parameters used in the pipeline. For example, parameter estimation network 120 may receive an input setting λ, and output a time step t and quantization setting Y. The input setting λ may specify a setting that may control a rate distortion tradeoff in improving the balance between the compression rate and the distortion. The compression rate may be the number of bits that is used to encode the data and the distortion may be the difference between the reconstructed image and the original image. The input setting may tradeoff a high bitrate with low distortion or a low bitrate with high distortion. When quantization results in a higher compression rate, a higher bitrate is used, which may lead to more accurate reconstruction and less distortion. When fewer bits are used for quantization, a lower bitrate is used, which may lead to a less accurate reconstruction and more distortion.

When the number of bits is reduced, a lower rate is achieved, but higher quantization error and greater distortion may result in the reconstructed image. However, the pipeline may compensate for the higher quantization error and greater distortion using diffusion model 116. Parameter estimation network 120 may be trained to discard information through the quantization process that can be synthesized using diffusion model 116. That is, if diffusion model 116 can be used to remove the quantization error introduced by quantization process 108, parameter estimation network 120 may output a quantization setting that provides a lower bitrate, but with higher quantization error (e.g., higher distortion). Then, even if there is higher distortion, diffusion model 116 may be used to generate the lost information and reduce the distortion. This allows the pipeline to use a lower bitrate, but still produce high quality realistic reconstructed images. However, if diffusion model 116 cannot remove some quantization error (e.g., distortion), then parameter estimation network 120 may output a quantization setting that may use a higher bitrate with lower distortion.

The time steps t may be the optimal number of denoising steps that diffusion model 116 should perform. Parameter estimation network 120 may be trained to predict a subset of the entire range of denoising steps that could be performed to produce optimal decoded images. The time step t may be used to produce realistic images. For a given quantization setting Y, a certain amount of quantization error (e.g., noise) is added.. There may be a specific number of time steps to remove that certain amount of noise. When this number of time steps is performed by diffusion model 116, a realistic image results, but doing other numbers of time steps may not result in a realistic image. For example, doing too many steps results in a smooth image, and too little steps results in a noisy image. So by predicting the number of time steps t to perform, and learning this prediction, parameter estimation network 120 learns how to produce a realistic image.

In some embodiments, parameter estimation network 120 may receive the latent representation y and the input setting λ. Based on the latent representation y and the input setting λ, parameter estimation network 120 outputs a time step t and quantization setting Y. In some embodiments, the input setting λ is a number, such as 5. The output time step t may also be a number, which is the number of diffusion iterations to perform. The quantization setting Y is a set of numbers that parameterizes the transform. Because the optimal number of denoising time steps depends on the amount of noise in the latent representation and therefore the severity of quantization, and vice versa, parameter estimation network 120 predicts time step t and the quantization setting Υ jointly. Parameter estimation network 120 may be trained to map the amount of noise in the latent representation y and the input setting λ to the optimal number of time steps t and the quantization setting Y.

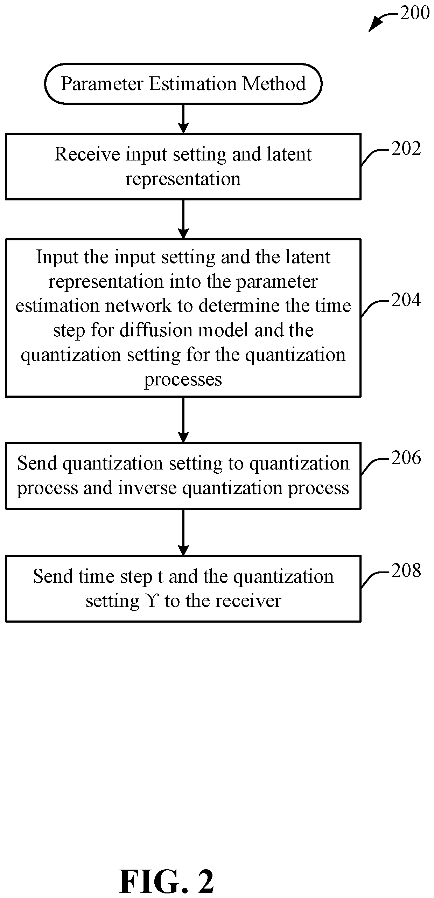

FIG. 2 depicts a simplified flowchart 200 of a method for performing parameter estimation according to some embodiments. At 202, parameter estimation network 120 receives the input setting λ and latent representation y. The input setting λ may be set on a per-content basis, such as for a specific video, on a per-receiver basis, or a combination of per-content and per-receiver. A fixed input setting λ may be received also for a number of videos or receivers. The latent representation y may be received from the output of encoder 106 for a video.

At 204, parameter estimation network 120 outputs the quantization setting Y and the time step t based on the latent representation y and the input setting λ. Parameter estimation network 120 may generate the quantization setting Y and time step t based on training to optimize parameters of parameter estimation network 120 to map the input setting λ and latent representation y to a quantization setting Y and time step t that lowers the bitrate while producing realistic images. As discussed above the quantization setting Y and time step t may balance lowering the bitrate while being able to remove noise that results from the quantization process.

At 206, parameter estimation network 120 sends the quantization setting Y to quantization process 108 and inverse quantization process 114. In some embodiments, parameter estimation network 120 may send the quantization setting Y via a network to receiver 104. Also, if parameter estimation network 120 is not local to encoder 106 and quantization process 108, parameter estimation network 120 may send the quantization setting Y via a network to quantization process 108.

At 208, parameter estimation network 120 sends the time step t and the quantization setting Y to receiver 104. Diffusion model 116 may use the time step t to perform a number of iterations of denoising steps on the reconstructed latent representation based on the value of the time step t. For example, if a value of 50 is received, diffusion model 116 may perform 50 iterations of denoising. Inverse quantization process 114 may use the quantization setting Y.

### Diffusion Model

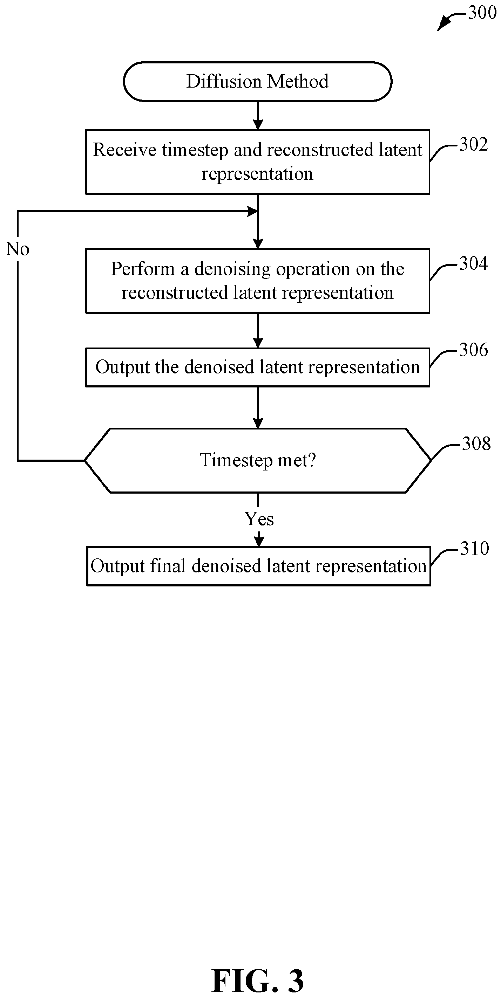

FIG. 3 depicts a simplified flowchart 300 of a method for performing a diffusion process according to some embodiments. At 302, diffusion model 116 receives the time step t and the reconstructed latent representation *ŷₜ*. The time step t is estimated by parameter estimation network 120.

At 304, diffusion model 116 performs a denoising operation on the reconstructed latent representation *ŷₜ*. As discussed above, diffusion model 116 may receive the reconstructed latent representation *ŷₜ* as input and the time step t. Then, diffusion model 116 may estimate the noise level of the reconstructed latent representation *ŷₜ* and predict the previous step of the forward process to remove some noise from the reconstructed latent representation *ŷₜ*. At 306, diffusion model 116 outputs the denoised reconstructed latent representation *ŷ*₀.

At 308, it is determined whether the time step t is met. For example, if there are 50 time steps, diffusion model 116 may compare the time step of 50 to the current time step. If the time step t is not met, the process reiterates to 304, where another denoising process is performed on the output of diffusion model 116. Here, the denoised reconstructed latent representation *ŷ*_{*t-*1} is denoised again using the same process as described above. This process will continue until the time step t is met. When the time step t is met, at 310, diffusion model 116 outputs the final denoised reconstructed latent representation *ŷ*₀. Here, diffusion model 116 may have removed some of the noise that is introduced as quantization error by the quantization process.

### Training

In some embodiments, diffusion model 116 may be used as a foundational model. The system may use stable diffusion as the foundation model, but other models may be used. The foundational models (e.g., diffusion models), which were trained, such as with a large amount of data and thus have excellent generative power to denoise latent representations of images. Here, the parameters of the foundational diffusion model may not be trained during a training process of parameter estimation network 120. Rather, the parameters of diffusion model 116 may be fixed during the training process. The training focuses on providing a rate-distortion optimization on further quantizing the latent representation produced by the quantization process.

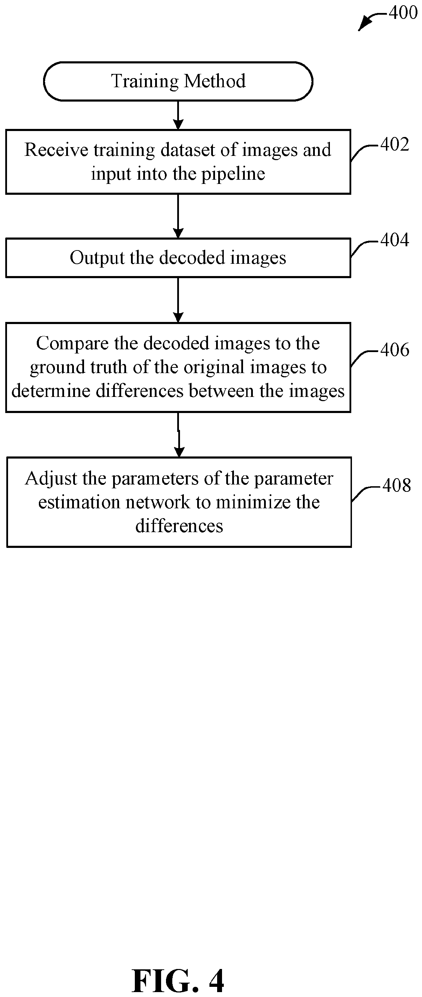

FIG. 4 depicts a simplified flowchart 400 of a method for performing the training process according to some embodiments. At 402, a training dataset of images may be input into the pipeline. The training dataset of images may be the ground truth. At 404, the pipeline outputs the decoded images. The pipeline may process the images as described above. At 406, the decoded images may be compared to the ground truth of the original images to determine differences between the decoded images and the original images. At 408, based on the differences, the parameters of the parameter estimation network 120 may be adjusted to minimize the difference, such as using a loss function. Here, the time step t and the quantization setting may be adjusted to minimize the loss. The pipeline may be trained to produce realistic images at low bitrates by adjusting the parameters of parameter estimation network. This may improve the use of the system as expensive training of diffusion model 116 may not be required. Also, the system may adjust the parameters of the entropy model of entropy encoding 110 or entropy decoding 112. Here, the system learns to best entropy model for the quantized data such that it can be coded to bitstream more efficiently.

### Conclusion

Accordingly, a lossy image compression codec based on latent diffusion models can be provided to produce realistic image reconstructions at low to very low bitrates. By combining the denoising capability of diffusion models with the inherent characteristics of quantization noise, the system predicts the ideal number of denoising steps to produce perceptually pleasing reconstructions over a range of bitrates. Lower bitrates may be achieved by allowing quantization error in the quantization process to use less bits. The error may be corrected by removing noise using diffusion model 116. The training of parameter estimation network 120 may generate quantization settings and a time step t that can produce realistic images at lower bitrates.

The system may also have a faster decoding time than other diffusion codecs due to reusing the foundational diffusion model and having a lower training budget. Also, the system offers control over the rate distortion tradeoff using an input setting into the parameter estimation network.

### System

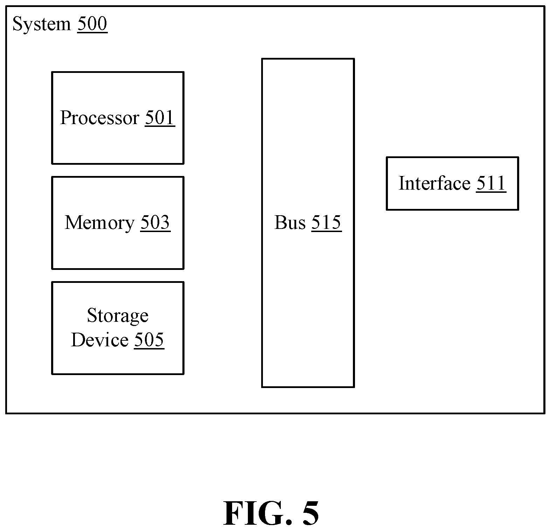

FIG. 5 illustrates one example of a computing device according to some embodiments. According to various embodiments, a system 500 suitable for implementing embodiments described herein includes a processor 501, a memory module 503, a storage device 505, an interface 511, and a bus 515 (e.g., a PCI bus or other interconnection fabric.) System 500 may operate as a variety of devices, or any other device or service described herein. Although a particular configuration is described, a variety of alternative configurations are possible. The processor 501 may perform operations such as those described herein. Instructions for performing such operations may be embodied in the memory 503, on one or more non-transitory computer readable media, or on some other storage device. Various specially configured devices can also be used in place of or in addition to the processor 501. Memory 503 may be random access memory (RAM) or other dynamic storage devices. Storage device 505 may include a non-transitory computer-readable storage medium holding information, instructions, or some combination thereof, for example instructions that when executed by the processor 501, cause processor 501 to be configured or operable to perform one or more operations of a method as described herein. Bus 515 or other communication components may support communication of information within system 500. The interface 511 may be connected to bus 515 and be configured to send and receive data packets over a network. Examples of supported interfaces include, but are not limited to: Ethernet, fast Ethernet, Gigabit Ethernet, frame relay, cable, digital subscriber line (DSL), token ring, Asynchronous Transfer Mode (ATM), High-Speed Serial Interface (HSSI), and Fiber Distributed Data Interface (FDDI). These interfaces may include ports appropriate for communication with the appropriate media. They may also include an independent processor and/or volatile RAM. A computer system or computing device may include or communicate with a monitor, printer, or other suitable display for providing any of the results mentioned herein to a user.

Any of the disclosed implementations may be embodied in various types of hardware, software, firmware, computer readable media, and combinations thereof. For example, some techniques disclosed herein may be implemented, at least in part, by non-transitory computer-readable media that include program instructions, state information, etc., for configuring a computing system to perform various services and operations described herein. Examples of program instructions include both machine code, such as produced by a compiler, and higher-level code that may be executed via an interpreter. Instructions may be embodied in any suitable language such as, for example, Java, Python, C++, C, HTML, any other markup language, JavaScript, ActiveX, VBScript, or Perl. Examples of non-transitory computer-readable media include, but are not limited to: magnetic media such as hard disks and magnetic tape; optical media such as flash memory, compact disk (CD) or digital versatile disk (DVD); magneto-optical media; and other hardware devices such as read-only memory ("ROM") devices and random-access memory ("RAM") devices. A non-transitory computer-readable medium may be any combination of such storage devices.

In the foregoing specification, various techniques and mechanisms may have been described in singular form for clarity. However, it should be noted that some embodiments include multiple iterations of a technique or multiple instantiations of a mechanism unless otherwise noted. For example, a system uses a processor in a variety of contexts but can use multiple processors while remaining within the scope of the present disclosure unless otherwise noted. Similarly, various techniques and mechanisms may have been described as including a connection between two entities. However, a connection does not necessarily mean a direct, unimpeded connection, as a variety of other entities (e.g., bridges, controllers, gateways, etc.) may reside between the two entities.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" include plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

## Claims

1. A method comprising:
receiving a quantized latent representation of an image in a latent space, wherein the image is encoded into a latent representation in the latent space and quantized to generate the quantized latent representation;
receiving a time step parameter that is generated based on the latent representation;
performing an inverse quantization process to generate a reconstructed latent representation;
performing, using a diffusion model, a denoising process for a number of iterations based on the time step parameter to remove noise from the reconstructed latent representation to generate a denoised reconstructed latent representation; and
decoding the denoised reconstructed latent representation into a reconstructed image.

2. The method of claim 1, wherein:
the quantized latent representation is entropy coded, and
the quantized latent representation is entropy decoded before performing the inverse quantization process.

3. The method of claim 1 or 2, further comprising:
receiving a quantization setting that is generated based on the latent representation in the latent space; and
performing the inverse quantization process using the quantization setting,
wherein, optionally, the quantization setting is used by the inverse quantization process to adjust a number of bits that are used for quantization to generate the reconstructed latent representation; and/or
wherein:
optionally, the quantization setting is generated based on the latent representation of the image and an input parameter, wherein the input parameter is based on a rate distortion balance.

4. The method of any one of claims 1 to 3, wherein:
the time step parameter is generated based on the latent representation of the image and an input parameter, wherein the input parameter is based on a rate distortion balance.

5. The method of any one of claims 1 to 4, wherein:
a quantization process and inverse quantization process add quantization error to the reconstructed latent representation compared to the latent representation of the image, and
the diffusion model is configured to remove noise associated with the quantization error.

6. The method of any one of claims 1 to 5, wherein:
a quantization error from generating the quantized latent representation adds noise to the reconstructed latent representation, and
the diffusion model denoises the reconstructed latent representation to remove noise from the reconstructed latent representation.

7. The method of any one of claims 1 to 6, wherein:
a network is trained to generate the time step parameter.

8. The method of claim 7, wherein:
the diffusion model is not trained during a training of the network; and/or
wherein:
the network is trained to generate a quantization setting that is used by the inverse quantization process to adjust a number of bits that are used for quantization to generate the reconstructed latent representation.

9. A non-transitory computer-readable storage medium having stored thereon computer executable instructions, which when executed by a computing device, cause the computing device to be operable for:
receiving a quantized latent representation of an image in a latent space, wherein the image is encoded into a latent representation in the latent space and quantized to generate the quantized latent representation;
receiving a time step parameter that is generated based on the latent representation;
performing an inverse quantization process to generate a reconstructed latent representation;
performing, using a diffusion model, a denoising process for a number of iterations based on the time step parameter to remove noise from the reconstructed latent representation to generate a denoised reconstructed latent representation; and
decoding the denoised reconstructed latent representation into a reconstructed image.

10. A method comprising:
receiving an image;
encoding the image into a latent representation in a latent space;
estimating a time step parameter based on the latent representation;
performing a quantization process on the latent representation to generate a quantized latent representation; and
transmitting the quantized latent representation to a receiver, wherein an inverse quantization process is performed to generate a reconstructed latent representation and a diffusion model performs a denoising process for a number of iterations based on the time step parameter to remove noise from the reconstructed latent representation.

11. The method of claim 10, wherein:
the quantized latent representation is entropy coded, and
the quantized latent representation is entropy decoded before performing the inverse quantization process.

12. The method of claim 10 or 11, further comprising:
determining a quantization setting that is generated based on the latent representation in the latent space; and
performing the quantization process using the quantization setting,
wherein:
optionally, the quantization setting is generated based on the latent representation of the image and an input parameter, wherein the input parameter is based on a rate distortion tradeoff.

13. The method of any one of claims 10 to 12, wherein estimating the time step parameter comprises:
estimating the time step parameter based on the latent representation of the image and an input parameter, wherein the input parameter is based on a rate distortion tradeoff.

14. The method of any one of claims 10 to 13, wherein:
a quantization error from the quantization process adds noise to the reconstructed latent representation, and
the diffusion model denoises the reconstructed latent representation to remove noise from the reconstructed latent representation.

15. The method of any one of claims 10 to 14, wherein:
a network is trained to generate the time step parameter,
wherein:
optionally, the network is trained to generate a quantization setting that is used by the quantization process to adjust a number of bits that are used for quantization to generate the quantized latent representation.
